Europäisches Patentamt

European Patent Office

Office européen des brevets

(19)

(11) Veröffentlichungsnummer: **0 244 448**
**B1**

(12) **EUROPÄISCHE PATENTSCHRIFT**

(45) Veröffentlichungstag der Patentschrift: **23.01.91**

(51) Int. Cl.[5]: **C 03 C 3/247**

(21) Anmeldenummer: **86906264.6**

(22) Anmeldetag: **17.10.86**

(86) Internationale Anmeldenummer:
**PCT/DE86/00416**

(87) Internationale Veröffentlichungsnummer:
**WO 87/02351 23.04.87 Gazette 87/09**

(54) **OPTISCHES PHOSPHATGLAS MIT ANOMALER POSITIVER TEILDISPERSION UND VERFAHREN ZU SEINER HERSTELLUNG.**

(30) Priorität: **19.10.85 DE 3537291**
**11.10.86 DE 3634675**

(43) Veröffentlichungstag der Anmeldung:
**11.11.87 Patentblatt 87/46**

(45) Bekanntmachung des Hinweises auf die
Patenterteilung:
**23.01.91 Patentblatt 91/04**

(84) Benannte Vertragsstaaten:
**AT CH DE FR GB LI NL**

(56) Entgegenhaltungen:
**DE-A-3 201 370**
**FR-A-1 557 218**
**FR-A-2 241 505**
**GB-A- 909 679**

(73) Patentinhaber: **Wild Leitz GmbH**
**Ernst-Leitz-Strasse 30 Postfach 20 20**
**D-6330 Wetzlar 1 (DE)**

(72) Erfinder: **BRÖMER, Heinz**
**Am Hundsrück 7**
**D-6330 Wetzlar 26 (DE)**
Erfinder: **HUBER, Werner**
**Bahnhofstr. 16**
**D-6336 Solms-Albshausen (DE)**
Erfinder: **MEINERT, Norbert**
**Am Sportfeld 5**
**D-6336 Solms-Albshausen (DE)**

# EP 0 244 448 B1

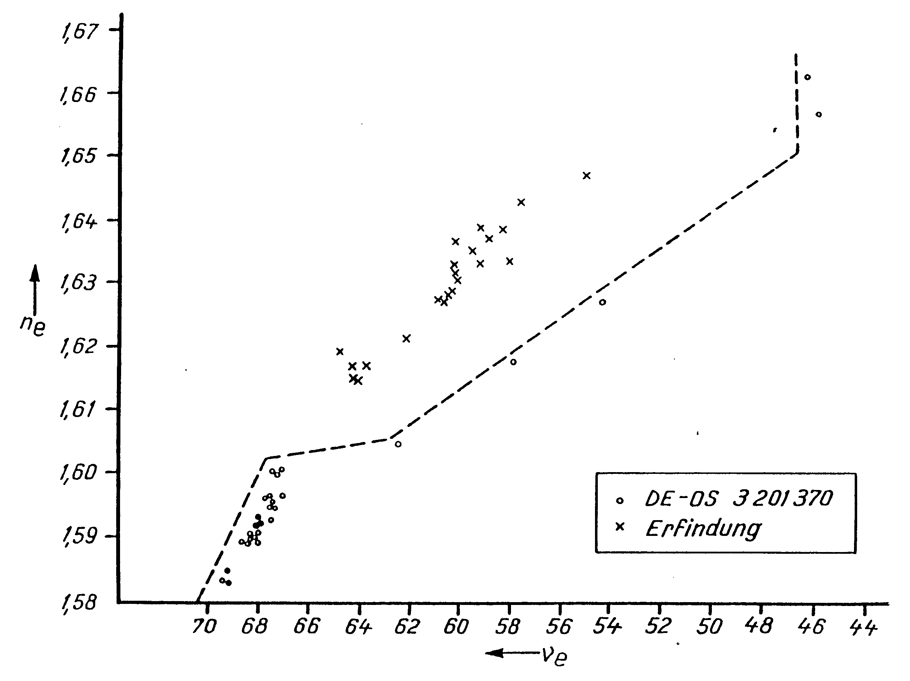

**Patentansprüche**

Die Anmeldung betrifft ein optisches Phosphatglas mit anomaler positiver Teildispersion, welches frei von Alkalien und Calcium ist, sowie ein Verfahren zu dessen Herstellung.

Seit einer Reihe von Jahren sind die Hersteller von optischem Glas bemüht, die Forderung der rechnenden Optiker zu erfüllen, nämlich die bisher in apochromatischen Systemen zur Korrektur des sekundären Spektrums mitverwendeten Kristalle — wie beispielsweise Calciumfluorid — durch stabile optische Gläser mit ähnlichen optischen Eigenschaften zu ersetzen. Es existieren heute optische Gläser auf Fluorphosphatbasis mit fast identischen optischen Lage-Parametern wie denjenigen des Calciumfluorids (Mineralname: Fluorit, $CaF_2$).

Als Glasbildner wurde bei diesen Systemen zunächst das stark giftige Berylliumfluorid ($BeF_2$) eingesetzt. Inzwischen dienen vorzugsweise Phosphate der I. bis III. Gruppe des Periodensystems der chemischen Elemente als Glasbildner.

Zur Erzielung hoher positiver $\Delta v_e$-Werte betragen die Fluoridkomponenten mehr als 50 Gew.-% der eingesetzten Rohstoffe. Wegen dieses hohen Fluoridanteils ist es schwierig, größere Einheiten dieser Gläser schlierenfrei zu erschmelzen.

Inzwischen werden diese Fluorphosphatgläser aber nicht nur für Mikro-Optiken, sondern auch für Foto-Optiken — und hier speziell für hochkorrigierte Teleobjective — eingesetzt. Dies bedeutet, daß neben den Mikro-Linsen von kleinem Durchmesser absolut schlierenfreie Linsen von bis zu mehr als 200 mm Durchmesser hergestellt werden müssen. Darüber hinaus besteht die Forderung, die Brechwerte gegenüber denjenigen des Calciumfluorids ($n_e = 1,4349$) wesentlich zu erhöhen.

Aus der DE—OS 32 01 370 sind Gläser bekannt, die als Glasbildner neben größeren Mengen von Aluminiummetaphosphat (13—39 Gew.-%) grundsätzlich auch Calciummetaphosphat (1—20 Gew.-%) enthalten. Darüber hinaus weisen sie einen Fluoridanteil zwischen 19 und 47 Gew.-% auf, Außerdem ist neben Bariumoxid auch Yttriumoxid und/oder Ytterbiumoxid in Mengen von 1,5 bis 12 Gew.-% enthalten. Nachschmelzen von in der DE—OS 32 01 370 angeführten Beispielen ergaben, daß selbst bei kleinsten Schmelzansätzen von ca. 50 g beim langsamen Abrühren Trübungen nicht zu vermeiden waren und die Schmelzen von einigen Beispielen auskristallisierten.

Es ist die Aufgabe der vorliegenden Erfindung, ein optisches Phosphatglas extremer optischer Lage bereitzustellen, dessen Brechzahl höher als diejenige des Calciumfluorids ist, dessen Dispersion relativ klein und dessen anomale positive Teildispersion relativ groß ist. Die Aufgabe besteht darüber hinaus darin, ein Verfahren zum schlierenfreien Erschmelzen des Glases in großen Einheiten anzugeben.

Diese Aufgabe wird erfindungsgemäß dadurch gelöst, daß das optische Phosphatglas mit einer anomalen Teildispersion $+\Delta v_e$ zwischen 2,2 und 7,0 einer Brechzahl $N_e$ zwischen 1.60 und 1.66 und einer Abbe-Zahl $v_e$ zwischen 65 und 55 folgende elementare Zusammensetzung in Gewichts-Prozent (Gew.-%) auf-weist: Magnesium (Mg): 1,5 bis 3,5; Strontium (Sr); 1,5 bis 4,5; Barium (Ba): 30,0 bis 47,0; Aluminium (Al): 2,5 bis 5,5; Phosphor (P): 10,0 bis 16,0; Fluor (F): 2,5 bis 4,5; Sauerstoff (O): 24,0 bis 30,0; Yttrium (Y): 0 bis 7,0; Gadolinium (Gd); 0 bis 13,0; Bor (B): 0 bis 1,0; Zirkon (Zr): 0 bis 3,0; Niob (Nb): 0 bis 5,0; Tantal (Ta): 0 bis 5,0, wobei das F/P-Verhältnis zwischen 0,15 und 0,4 liegt und die Summe der Erdalkalien zwischen 36 und 52 beträgt. Die Aufgabe wird alternativ durch ein Verfahren zur Herstellung eines derartigen Phosphatglases gelöst, und zwar durch Erschmelzen eines Gemenges mit folgender Ausgangszusammensetzung (in Gew.-%): Magnesiummetaphosphate ($Mg(PO_3)_2$): 12,3 bis 19,3; Barium-metaphosphat ($Ba(PO_3)_2$): 17,0 bis 20,0; Aluminiummetaphosphat ($Al(PO_3)_3$): 11,3 bis 13,3, wobei der Gehalt an Erdalkalimetaphosphaten zwischen 29,3 und 37,3 und der Gesamtgehalt aller eingesetzten Metaphosphate zwischen 40,6 und 49,6 beträgt; Magnesiumfluorid ($MgF_2$): 1,0; Strontiumfluorid ($SrF_2$): 2,5 bis 3,6; Bariumfluorid ($BaF_2$): 1,0; Aluminiumfluorid ($AlF_3$): 2,5, wobei der Gehalt an Erdalkalifluoriden zwischen 4,5 und 5,6 und der Gesamtgehalt aller eingesetzten Fluoride zwischen 7,0 und 8,1 beträgt; Strontiumoxid (SrO): 1,0; Bariumoxid (BaO): 25,3 bis 39,3; Aluminiumoxid ($Al_2O_3$): 2,0 bis 5,0; Yttriumoxid ($Y_2O_3$): 0 bis 8,0; Gadoliniumoxid ($Gd_2O_3$): 0 bis 14,0; Bortrioxid ($B_2O_3$): 0 bis 1,1; Zirkondioxid ($ZrO_2$): 0 bis 3,3; Niobpentoxid ($Nb_2O_5$): 0 bis 6,0; Tantalpentoxid ($Ta_2O_5$): 0 bis 6,0, wobei der gehalt an Erdalkalioxiden zwischen 26,3 und 40,3, der Gehalt an Oxiden der dreiwertigen Elemente zwischen 2,0 und 19,0, der Gehalt an Oxiden der vier- und fünfwertigen Elemente (Zr, bzw. Ta und Nb) bis zu 6,0 und der Gesamtgehalt aller eingesetzten Oxide zwischen 42,3 und 51,3 beträgt.

Weitere Ausgestaltungen ergeben sich aus den Unteransprüchen.

In der Zeichnung sind in dem optischen Lageplan ($n_e$-$v_e$-Diagramm) die in den nachfolgenden Tabellen 1 und 2 aufgeführten erfindungsgemäßen Einzelbeispiele angekreuzt. Außerdem sind die aus der DE—OS 32 01 370 bekannten Gläser durch kleine Kreise gekennzeichnet. Die strichlinierte Grenze verdeutlicht, daß die erfindungsgemäßen Gläser bereits hinsichtlich ihrer $n_e$/$v_e$-Parameter-Kombinationen in einem anderen Koordinatenfeld liegen, als die zum Stand der Technik gehörenden Beispiele.

EP 0 244 448 B1

TABELLE 1 (in Gew.-%)

| Beispiele: | 1 | 2 | 3 | 4 | 5 | 6 | 7 | 8 | 9 | 10 | 11 |
|---|---|---|---|---|---|---|---|---|---|---|---|
| Mg | 2,97 | 2,97 | 2,57 | 2,93 | 2,97 | 2,57 | 2,57 | 2,57 | 2,57 | 2,57 | 2,57 |
| Sr | 3,35 | 3,35 | 3,35 | 3,21 | 2,66 | 3,35 | 3,35 | 3,35 | 3,35 | 3,35 | 3,35 |
| Ba | 43,89 | 43,89 | 45,29 | 43,89 | 44,35 | 42,10 | 40,31 | 36,73 | 42,10 | 38,52 | 31,37 |
| Al | 4,08 | 3,22 | 3,22 | 4,33 | 4,08 | 4,61 | 4,61 | 4,61 | 4,61 | 4,61 | 4,61 |
| P | 14,11 | 14,82 | 14,43 | 14,00 | 14,32 | 13,09 | 13,09 | 13,09 | 13,09 | 13,09 | 13,09 |
| F | 3,60 | 3,60 | 3,60 | 3,58 | 3,31 | 3,60 | 3,60 | 3,60 | 3,60 | 3,60 | 3,60 |
| O | 28,00 | 28,15 | 27,54 | 28,06 | 28,31 | 27,71 | 27,93 | 28,37 | 27,54 | 27,66 | 27,87 |
| Y | - | - | - | - | - | 1,57 | 3,14 | 6,28 | - | - | - |
| Gd | - | - | - | - | - | - | - | - | 1,74 | 5,20 | 12,14 |
| Nb | - | - | - | - | - | 1,40 | 1,40 | 1,40 | 1,40 | 1,40 | 1,40 |
| $n_e$ | 1,6186 | 1,6141 | 1,6168 | 1,6147 | 1,6168 | 1,6286 | 1,6307 | 1,6319 | 1,6282 | 1,6329 | 1,6389 |
| $\nu_e$ | 64,81 | 64,16 | 63,82 | 64,13 | 64,30 | 60,40 | 60,11 | 60,35 | 60,47 | 60,35 | 59,37 |
| $+\Delta\nu_e$ | 5,85 | 6,85 | 5,44 | 5,78 | 5,86 | 4,49 | 4,24 | 5,93 | 4,64 | 5,50 | 3,70 |

TABELLE 2 (in Gew.-%)

| Beispiele: | 12 | 13 | 14 | 15 | 16 | 17 | 18 | 19 | 20 | 21 | 22 |
|---|---|---|---|---|---|---|---|---|---|---|---|
| Mg | 2,57 | 2,57 | 2,57 | 2,57 | 2,57 | 2,57 | 2,30 | 2,03 | 2,57 | 2,30 | 2,03 |
| Sr | 2,94 | 2,59 | 2,94 | 2,94 | 2,94 | 3,35 | 3,35 | 3,35 | 3,35 | 3,35 | 3,35 |
| Ba | 36,73 | 34,94 | 35,57 | 34,67 | 33,78 | 43,89 | 43,89 | 43,89 | 43,89 | 43,89 | 43,89 |
| Al | 4,61 | 4,61 | 4,61 | 4,61 | 4,61 | 4,61 | 4,61 | 4,61 | 4,61 | 4,61 | 4,61 |
| P | 13,09 | 13,09 | 13,09 | 13,09 | 13,09 | 13,09 | 12,41 | 11,73 | 13,09 | 12,41 | 11,73 |
| F | 3,43 | 3,28 | 3,43 | 3,43 | 3,43 | 3,60 | 3,60 | 3,60 | 3,60 | 3,60 | 3,60 |
| O | 28,10 | 28,51 | 28,30 | 28,46 | 28,61 | 27,25 | 26,56 | 25,87 | 27,49 | 27,04 | 26,59 |
| Gd | 6,94 | 8,67 | 6,94 | 6,94 | 6,94 | - | - | - | - | - | - |
| B | 0,19 | 0,34 | 0,19 | 0,19 | 0,19 | - | - | - | - | - | - |
| Zr | - | - | 0,96 | 1,70 | 2,44 | - | - | - | - | - | - |
| Nb | 1,40 | 1,40 | 1,40 | 1,40 | 1,40 | - | - | - | 1,40 | 2,80 | 4,20 |
| Ta | - | - | - | - | - | 1,64 | 3,28 | 4,92 | - | - | - |
| $n_e$ | 1,6362 | 1,6353 | 1,6376 | 1,6384 | 1,6427 | 1,6211 | 1,6275 | 1,6336 | 1,6269 | 1,6338 | 1,6472 |
| $\nu_e$ | 60,33 | 59,63 | 58,88 | 58,47 | 57,73 | 62,23 | 60,81 | 59,31 | 60,93 | 58,13 | 55,06 |
| + $\Delta\nu_e$ | 5,31 | 3,29 | 2,79 | 3,23 | 2,40 | 3,97 | 3,32 | 6,37 | 4,99 | 2,66 | 4,08 |

In den nachfolgenden Tabellen 3 und 4 sind die Ausgangszusammensetzungen der in den Tabellen 1 und 2 enthaltenen erfindungsgemäßen Gläser angegeben. Dabei sind in Tabelle 3 diejenigen Beispiele enthalten, welche neben den essentiellen Komponenten noch die wahlweise einzusetzenden Komponenten $Y_2O_3$, $Gd_2O_3$ und $Nb_2O_5$ einzeln oder in Kombination aufweisen, während in Tabelle 4 diejenigen Beispiele aufgeführt sind, welche als wahlweise einzusetzende Komponenten $Gd_2O_3$, $B_2O_3$, $ZrO_2$, $Nb_2O_5$ und $Ta_2O_5$ einzeln oder in Kombination enthalten.

TABELLE 3 (in Gew.-%)

| Beispiele: | 1 | 2 | 3 | 4 | 5 | 6 | 7 | 8 | 9 | 10 | 11 |
|---|---|---|---|---|---|---|---|---|---|---|---|
| $Mg(PO_3)_2$ | 19,3 | 19,3 | 16,3 | 19,0 | 19,3 | 16,3 | 16,3 | 16,3 | 16,3 | 16,3 | 16,3 |
| $Ba(PO_3)_2$ | 17,0 | 17,0 | 20,0 | 17,0 | 18,0 | 17,0 | 17,0 | 17,0 | 17,0 | 17,0 | 17,0 |
| $Al(PO_3)_3$ | 11,3 | 13,3 | 13,3 | 11,3 | 11,3 | 11,3 | 11,3 | 11,3 | 11,3 | 11,3 | 11,3 |
| $MgF_2$ | 1,0 | 1,0 | 1,0 | 1,0 | 1,0 | 1,0 | 1,0 | 1,0 | 1,0 | 1,0 | 1,0 |
| $SrF_2$ | 3,6 | 3,6 | 3,6 | 3,4 | 2,6 | 3,6 | 3,6 | 3,6 | 3,6 | 3,6 | 3,6 |
| $BaF_2$ | 1,0 | 1,0 | 1,0 | 1,0 | 1,0 | 1,0 | 1,0 | 1,0 | 1,0 | 1,0 | 1,0 |
| $AlF_3$ | 2,5 | 2,5 | 2,5 | 2,5 | 2,5 | 2,5 | 2,5 | 2,5 | 2,5 | 2,5 | 2,5 |
| $SrO$ | 1,0 | 1,0 | 1,0 | 1,0 | 1,0 | 1,0 | 1,0 | 1,0 | 1,0 | 1,0 | 1,0 |
| $BaO$ | 39,3 | 39,3 | 39,3 | 39,3 | 39,3 | 37,3 | 35,3 | 31,3 | 37,3 | 33,3 | 25,3 |
| $Al_2O_3$ | 4,0 | 2,0 | 2,0 | 4,5 | 4,0 | 5,0 | 5,0 | 5,0 | 5,0 | 5,0 | 5,0 |
| $Y_2O_3$ | - | - | - | - | - | 2,0 | 4,0 | 8,0 | - | - | - |
| $Gd_2O_3$ | - | - | - | - | - | - | - | - | 2,0 | 6,0 | 14,0 |
| $Nb_2O_5$ | - | - | - | - | - | 2,0 | 2,0 | 2,0 | 2,0 | 2,0 | 2,0 |

TABELLE 4 (in Gew.-%)

| Beispiele: | 12 | 13 | 14 | 15 | 16 | 17 | 18 | 19 | 20 | 21 | 22 |
|---|---|---|---|---|---|---|---|---|---|---|---|
| $Mg(PO_3)_2$ | 16,3 | 16,3 | 16,3 | 16,3 | 16,3 | 16,3 | 14,3 | 12,3 | 16,3 | 14,3 | 12,3 |
| $Ba(PO_3)_2$ | 17,0 | 17,0 | 17,0 | 17,0 | 17,0 | 17,0 | 17,0 | 17,0 | 17,0 | 17,0 | 17,0 |
| $Al(PO_3)_3$ | 11,3 | 11,3 | 11,3 | 11,3 | 11,3 | 11,3 | 11,3 | 11,3 | 11,3 | 11,3 | 11,3 |
| $MgF_2$ | 1,0 | 1,0 | 1,0 | 1,0 | 1,0 | 1,0 | 1,0 | 1,0 | 1,0 | 1,0 | 1,0 |
| $SrF_2$ | 3,0 | 2,5 | 3,0 | 3,0 | 3,0 | 3,6 | 3,6 | 3,6 | 3,6 | 3,6 | 3,6 |
| $BaF_2$ | 1,0 | 1,0 | 1,0 | 1,0 | 1,0 | 1,0 | 1,0 | 1,0 | 1,0 | 1,0 | 1,0 |
| $AlF_3$ | 2,5 | 2,5 | 2,5 | 2,5 | 2,5 | 2,5 | 2,5 | 2,5 | 2,5 | 2,5 | 2,5 |
| $SrO$ | 1,0 | 1,0 | 1,0 | 1,0 | 1,0 | 1,0 | 1,0 | 1,0 | 1,0 | 1,0 | 1,0 |
| $BaO$ | 31,3 | 29,3 | 30,0 | 29,0 | 28,0 | 39,3 | 39,3 | 39,3 | 39,3 | 39,3 | 39,3 |
| $Al_2O_3$ | 5,0 | 5,0 | 5,0 | 5,0 | 5,0 | 5,0 | 5,0 | 5,0 | 5,0 | 5,0 | 5,0 |
| $Gd_2O_3$ | 8,0 | 10,0 | 8,0 | 8,0 | 8,0 | - | - | - | - | - | - |
| $B_2O_3$ | 0,6 | 1,1 | 0,6 | 0,6 | 0,6 | - | - | - | - | - | - |
| $ZrO_2$ | - | - | 1,3 | 2,3 | 3,3 | - | - | - | - | - | - |
| $Ta_2O_5$ | - | - | - | - | - | 2,0 | 4,0 | 6,0 | - | - | - |
| $Nb_2O_5$ | 2,0 | 2,0 | 2,0 | 2,0 | 2,0 | - | - | - | 2,0 | 4,0 | 6,0 |

EP 0 244 448 B1

# EP 0 244 448 B1

Das Gemenge wird zweckmäßig in einem Platintiegel erschmolzen. Nachfolgend ist die Durchführung einer Schmelze von 6 kg Einwaage beschrieben.

Das Schmelzgemenge besteht aus einem Materialgemisch, wie es in der Tabelle 3 unter dem Schmelzbeispiel Nr. 1 aufgeführt wird. Das gut durchmischte Gemenge wird portionsweise in einen Platintiegel eingelegt, dessen Temperatur 1100 bis 1150°C beträgt. Die Einlegezeit liegt bei ca. 1 Stunde. Ist das Ausgangsgemenge eingeschmolzen, wird die Temperatur auf ca. 1250°C erhöht und unter Rühren etwa 15 Minuten lang bei dieser Temperatur belassen. Die Rührgeschwindigkeit des Platinrührers beträgt dabei beispielsweise 120 U/min (= Umdrehungen pro Minute). Anschließend wird auf ca. 1150°C zurückgefahren und etwa 45 Minuten lang unter Intervall-Rühren geläutert. Ist die Schmelze blasenfrei, so wird die Rühgeschwindigkeit auf ca. 80 U/min reduziert und sodann auf eine Abgußtemperatur von ca. 900°C abgefahren. Die Schmelze wird schließlich in auf ca. 550°C vorgewärmte Stahlformen abgegossen und in einem Temperofen abgekühlt.

Das so hergestellte Glas ist farblos und schlierenfrei und hat nach der Feinkühlung folgende optische Daten:

$$n_e \quad = 1{,}6186$$
$$V_e \quad = 64{,}81$$
$$g_g' \quad = 0{,}4832$$
$$+\Delta v_e = 5{,}85$$

Hierbei bedeuten:

$n_e$ = Brechzahl
$v_e$ = Abbe-Zahl (Reziprok-Wert der Dispersion)
$g_g'$ = (eigentliche) anomale Teildispersion, wobei gilt:

$$g_g' = \frac{n_g - n_F'}{n_F' - n_C'} \; ;$$

dabei bedeuten die tiefgestellten Indizes:

g = blaue Quecksilberlinie (435,84 nm);
F' = blaue Cadmiumlinie (479,99 nm);
C' = rote Cadmiumlinie (643,85 nm);
$+\Delta v_e$ = positive Abweichung von der sogenannten "Normalgeraden", wie sie beispielsweise in der Zeichnung der DE—PS 14 96 563 bzw. der korrespondierenden US—PS 34 51 829 graphisch dargestellt und näher erläutert wurde. Dieser Differenzbetrag wird als "positiver anomaler Teildispersionswert" bezeichnet.

Das erhaltene Glas weist die folgende Transmissionscharakterisitik auf:

| λ [nm] | $\tau_i$ (5 mm) | $\tau_i$ (25 mm) |
|--------|----------------|------------------|
| 1014,0 | 0,990 | 0,953 |
| 700,0 | 0,999 | 0,997 |
| 660,0 | 0,999 | 0,997 |
| 620,0 | 0,999 | 0,995 |
| 580,0 | 0,999 | 0,995 |
| 546,1 | 0,999 | 0,995 |
| 500,0 | 0,997 | 0,985 |
| 460,0 | 0,993 | 0,965 |
| 435,8 | 0,989 | 0,946 |
| 420,0 | 0,989 | 0,946 |
| 404,7 | 0,984 | 0,924 |
| 400,0 | 0,980 | 0,905 |
| 390,0 | 0,960 | 0,815 |
| 380,0 | 0,922 | 0,667 |
| 370,0 | 0,860 | 0,469 |
| 365,0 | 0,808 | 0,344 |
| 350,0 | 0,564 | 0,057 |
| 334,1 | 0,231 | - |
| 320,0 | 0,044 | - |

Dabei bedeuten:

λ : die verwendete Meßwellenlänge [nm];

$\tau_i$ (5 mm): den Reintransmissionsgrad eines 5 mm starken Glasplättchens;

$\tau_i$ (25 mm): den Reintransmissionsgrad eines 25 mm starken Glasplättchens.

Weitere physiko-chemische Eigenschaften des erhaltenen Glases sind nachfolgend angegeben:
linearer thermischer Ausdehnungkoeffizient

°20/300°C = 12,2 $[10^{-6} \cdot 1/°C]$
Transformationstemperatur $T_g$ = 612°C
Dichte φ = 4,07 g/cm$^3$
Knoop-Härte HK = 389.

Das Glas ist fluoreszenzarm und zu Preßlingen mit großen Durchmessern verarbeitbar. Es wird insbesondere für hochkorrigierte Fotoobjektive verwendet.

**Patentansprüche**

1. Optisches Phosphatglas mit anomaler positiver Teildispersion $+\Delta v_e$ zwischen 2.2 und 7.0, einer Brechzahl $n_e$ zwischen 1.60 und 1.66 und einer Abbe-Zahl $v_e$ zwischen 65 und 55, dadurch gekennzeichnet, daß es die folgende elementare Zusammensetzung aufweist (in Gew.-%):

| Mg | 1,5 — 3,5 |
|----|-----------|
| Sr | 1,5 — 4,5 |
| Ba | 30,0—47,0 |
| Al | 2,5—5,5 |
| P | 10,0 — 16,0 |
| F | 2,5 — 4.5 |
| O | 24,0 — 30,0 |
| Y | 0 — 7,0 |
| Gd | 0 — 13,0 |
| B | 0 — 1,0 |
| Zr | 0 — 3,0 |
| Nb | 0 — 5,0 |
| Ta | 0 — 5,0 |

wobei das F/P-Verhältnis zwischen 0,15 und 0,4 liegt und die Summe der Erdalkalien zwischen 36 und 52 beträgt.

2. Glas nach Anspruch 1, dadurch gekennzeichnet, daß es eine Brechzahl $n_e$ zwischen 1.61 und 1.65, eine Abbe-Zahl $v_e$ zwischen 64.8 und 55.0, einen positiven anomalen Teildispersionswert $+\Delta v_e$ zwischen 2.4 und 6.9 sowie folgende elementare Zusammensetzung aufweist (in Gew.-%):

| Mg | 2— 3 |
|----|------|
| Sr | 2— 4 |
| Ba | 31—46 |
| Al | 3— 5 |
| P | 11—15 |
| F | 3— 4 |
| O | 25—29 |
| Y | 0— 7 |
| Gd | 0—13 |
| B | 0— 1 |
| Zr | 0— 3 |
| Nb | 0— 5 |
| Ta | 0— 5 |

wobei das F/P-Verhältnis zwischen 0.2 und 0.35 liegt und die Summe der Erdalkalien zwischen 37 und 52 beträgt.

3. Glas nach einem der Ansprüche 1 und 2, dadurch gekennzeichnet, daß es eine Brechzahl $n_e = 1.619$, eine Abbe-Zahl $v_e = 64.8$, ein $+\Delta v_e = 5.9$ und folgende elementare Zusammensetzung aufweist (in Gew.-%):

| Mg | 3,0 |
|----|-----|
| Sr | 3,3 |
| Ba | 43,9 |
| Al | 4,1 |
| P | 14,1 |
| F | 3,6 |
| O | 28,0 |

wobei das F/P-Verhältnis 0.26 und die Summe der Erdalkalien 50.2 beträgt.

4. Verfahren zur Herstellung eines optischen Phosphatglases nach einem der vorhergehenden Ansprüche, dadurch gekennzeichnet, daß es aus einem Gemenge erschmolzen wird, welches folgende Ausgangszusammensetzung aufweist (in Gew.-%):

| $Mg(PO_3)_2$ | 12,3—19,3 |
|--------------|-----------|
| $Ba(PO_3)_2$ | 17,0—20,0 |
| $Al(PO_3)_3$ | 11,3—13,3 |

wobei der Gehalt an Erdalkalimetaphosphaten zwischen 29,3 und 37,3 und der Gesamtgehalt aller eingesetzten Metaphosphate zwischen 40,6 und 49,6 beträgt;

| $MgF_2$ | 1,0 |
|---------|-----|
| $SrF_2$ | 2,5—3,6 |
| $BaF_2$ | 1,0 |
| $AlF_3$ | 2,5 |

wobei der Gehalt an Erdalkalifluoriden zwischen 4,5 und 5,6 und der Gesamtgehalt aller eingesetzten Fluoride zwischen 7,0 und 8,1 beträgt:

| | |
|---|---|
| SrO | 1,0 |
| BaO | 25,3—39,3 |
| Al$_2$O$_3$ | 2,0— 5,0 |
| Y$_2$O$_3$ | 0 — 8,0 |
| Gd$_2$O$_3$ | 0 —14,0 |
| B$_2$O$_3$ | 0 — 1,1 |
| ZrO$_2$ | 0 — 3,3 |
| Nb$_2$O$_5$ | 0 — 6,0 |
| Ta$_2$O$_5$ | 0 — 6,0 |

wobei der Gehalt an Erdalkalioxiden zwischen 26,3 und 40,3, der Gehalt an Oxiden der dreiwertigen Elemente zwischen 2,0 und 19,0, der Gehalt an Oxiden der vier- bzw. fünfwertigen Elemente (Zr, bzw. Ta und Nb) bis zu 6,0 und der Gesamtgehalt aller eingesetzten Oxide zwischen 42,3 und 51,3 beträgt.

5. Verfahren nach Anspruch 4, dadurch gekennzeichnet, daß das Gemenge folgende Ausgangszusammensetzung aufweist (in Gew.-%):

| | |
|---|---|
| Mg(PO$_3$)$_2$ | 19,3 |
| Ba(PO$_3$)$_2$ | 17,0 |
| Al(PO$_3$)$_3$ | 11,3 |
| MgF$_2$ | 1,0 |
| SrF$_2$ | 3,6 |
| BaF$_2$ | 1,0 |
| AlF$_3$ | 2,5 |
| SrO | 1,0 |
| BaO | 39,3 |
| Al$_2$O$_3$ | 4,0 |

6. Verfahren zur Herstellung eines Glases nach mindestens einem der Ansprüche 4 und 5, dadurch gekennzeichnet, daß es nach den folgenden Schritten abläuft:

a) Eingeben des Ausgangsgemenges in einen auf 1100—1150°C erhitzten Platintiegel innerhalb von 60 Minuten;

b) Erhöhen der Schmelztemperatur auf 1230—1270°C unter gleichzeitigem Rühren innerhalb einer Zeit von 15 Minuten;

c) Läutern der Schmelze bei Temperaturen zwischen 1130—1170°C innerhalb einer Zeit von bis zu 45 Minuten unter gleichzeitigem Rühren mit verminderter Rührgeschwindigkeit;

d) Reduzieren der Temperatur auf eine Abgußtemperatur von 880—920°C;

e) Abgiessen in auf bis zu 550°C vorgewärmte Stahlformen;

f) Feinkühlen im Ofen.

**Revendications**

1. Verre phosphatéoptique avec dispersion particulaire positive anomale $+\Delta v_e$ comprise entre 2,2 et 7,0, un indice de réfraction $n_e$ compris entre 1,60 et 1,66 et un coefficient de Abbé $v_e$ compris entre 65 et 55, caractérisé en ce qu'il présente la composition élémentaire suivante (en % en poids):

| | |
|---|---|
| Mg | 1,5—3,5 |
| Sr | 1,5—4,5 |
| Ba | 30,0—47,0 |
| Al | 2,5—5,5 |
| P | 10,0—16,0 |
| F | 2,5—4,5 |
| O | 24,0—30,0 |
| Y | 0—7,0 |
| Gd | 0—13,0 |
| B | 0—1,0 |
| Zr | 0—3,0 |
| Nb | 0—5,0 |
| Ta | 0—5,0 |

où le rapport F/P est compris entre 0,15 et 0,4 et la somme des alcalino-terreux est comprise entre 36 et 52.

2. Verre selon la revendication 1, caractérisé en ce qu'il présente un indice de réfraction $n_e$ compris 1,61 et 1,65, un coefficient de Abbé $v_e$ compris entre 64,8 et 55,0, une valeur de dispersion partielle positive

anomale $+\Delta v_e$ comprise entre 2,4 et 6,9 ainsi que la composition élémentaire suivante (% en poids):

| Mg | 2— 3 |
|----|------|
| Sr | 2— 4 |
| Ba | 31—46 |
| Al | 3— 5 |
| P | 11—15 |
| F | 3— 4 |
| O | 25—29 |
| Y | 0— 7 |
| Gd | 0—13 |
| B | 0— 1 |
| Zr | 0— 3 |
| Nb | 0— 5 |
| Ta | 0— 5 |

où le rapport F/P est compris entre 0,2 et 0,35 et la somme des alcalino-terreux est comprise entre 37 et 52.

3. Verre selon l'une quelconque des revendications 1 ou 2, caractérisé en ce qu'il présente un indice de refraction $n_e = 1,619$, un coefficient de Abbé $v_e = 64,8$, une valeur $+\Delta v_e = 5,9$ et la composition élémentaire suivante (en % en poids):

| Mg | 3,0 |
|----|-----|
| Sr | 3,3 |
| Ba | 43,9 |
| Al | 4,1 |
| P | 14,1 |
| F | 3,6 |
| O | 28,0 |

où le rapport F/P est de 0,26 et la somme des alcalino-terreux est de 50,2.

4. Procédé pour la fabrication d'un verre phosphaté optique selon l'une quelconque des revendications précédentes, caractérisé en ce qu'il est élaboré à partir d'une fritte, qui présente la composition de départ qui suit (en % en poids):

| $Mg(PO_3)_2$ | 12,3—19,3 |
|----|------|
| $Ba(PO_3)_2$ | 17,0—20,0 |
| $Al(PO_3)_3$ | 11,3—13,3 |

où la teneur en métaphosphates alcalino-terreux est comprise entre 29,3 et 37,3 et la teneur totale de tous les métaphosphates utilisés est comprise entre 40,6 et 49,6;

| $MgF_2$ | 1,0 |
|----|------|
| $SrF_2$ | 2,5—3,6 |
| $BaF_2$ | 1,0 |
| $AlF_3$ | 2,5 |

où la teneur en fluorures alcalino-terreux est comprise entre 4,5 et 5,6 et la teneur totale de tous les fluorures utilisés est comprise entre 7,0 et 8,1:

| SrO | 1,0 |
|----|------|
| BaO | 25,3—39,3 |
| $Al_2O_3$ | 2,0— 5,0 |
| $Y_2O_3$ | 0 — 8,0 |
| $Gd_2O_3$ | 0 —14,0 |
| $B_2O_3$ | 0 — 1,1 |
| $ZrO_2$ | 0 — 3,3 |
| $Nb_2O_5$ | 0 — 6,0 |
| $Ta_2O_5$ | 0 — 6,0 |

où la teneur en oxydes alcalino-terreux est comprise entre 26,3 et 40,3, la teneur en oxydes des éléments trivalents entre 2,0 et 19,0, la teneur en oxydes des éléments tétra ou respectivement, pentavalents (Zr ou, respectivement Ta et Nb) atteint 6,0 et la teneur totale de tous les oxydes utilisés est comprise entre 42,3 et 51,3.

**EP 0 244 448 B1**

5. Procédé selon la revendication 4, caractérisé en ce que la fritte présente la composition de départ qui suit (en % en poids):

| | |
|---|---|
| $Mg(PO_3)_2$ | 19,3 |
| $Ba(PO_3)_2$ | 17,0 |
| $Al(PO_3)_3$ | 11,3 |
| $MgF_2$ | 1,0 |
| $SrF_2$ | 3,6 |
| $BaF_2$ | 1,0 |
| $AlF_3$ | 2,5 |
| SrO | 1,0 |
| BaO | 39,3 |
| $Al_2O_3$ | 4,0 |

6. Procédé pour la fabrication d'un verre selon au moins l'une des revendications 4 et 5, caractérisé en ce qu'il comporte les étapes suivantes:

a) Charge de la fritte de départ dans un creuset en platine chauffé entre 1100 et 1150°C, en 60 minutes;

b) augmentation de la température du bain à 1230—1270°C avec agitation simultanée en un temps de 15 minutes;

c) affinage du bain à des températures comprises entre 1130 et 1170°C en un temps pouvant atteindre 45 minutes, avec agitation simultanée à une vitesse moindre d'agitation;

d) réduction de la température à une température de moulage de 880—920°C;

e) moulage dans des moules en acier préchauffés à 550°C;

f) refroidissement précis dans un four.

**Claims**

1. Optical phosphate glass with anomalous positive partial dispersion $+\Delta v_e$ between 2.2 and 7.0, a refractive index $n_e$ between 1.60 and 1.66 and an Abbe number $v_e$ between 65 and 55, characterised thereby, that it displays the following elementary composition (in % by weight):

| | |
|---|---|
| Mg | 1.5— 3.5 |
| Sr | 1.5— 4.5 |
| Ba | 30.0—47.0 |
| Al | 2.5— 5.5 |
| P | 10.0—16.0 |
| F | 2.5— 4.5 |
| O | 24.0—30.0 |
| Y | 7.0 |
| Gd | 13.0 |
| B | 1.0 |
| Zr | 3.0 |
| Nb | 5.0 |
| Ta | 5.0 |

wherein the ratio of F to P lies between 0.15 and 0.4 and the sum of the alkaline earths amounts to between 36 and 52.

2. Glass according to claims 1, characterised thereby, that it displays a refractive index $n_e$ between 1.61 and 1.65, an Abbe number $v_e$ between 64.8 and 55.0, a positive anomalous dispersion value $\Delta v_e$ 2.4 and 6.9 as well as the following elementary composition (in % by weight):

| | |
|---|---|
| Mg | 2— 3 |
| Sr | 2— 4 |
| Ba | 31—46 |
| Al | 3— 5 |
| P | 11—15 |
| F | 3— 4 |
| O | 25—29 |
| Y | 0— 7 |
| Gd | 0—13 |
| B | 0— 1 |
| Zr | 0— 3 |
| Nb | 0— 5 |
| Ta | 0— 5, |

13

wherein the ratio of F to P lies between 0.2 and 0.35 and the sum of the alkaline earths amounts to between 37 and 52.

3. Glass according to one of the claims 1 and 2, characterised thereby, that it displays a refractive index $n_e$ equal to 1,619, an Abbe number $v_e$ equal to 64.8, a $+\Delta v_e$ equal to 5.9 and the following elementary composition (in % by weight):

| | |
|----|------|
| Mg | 3.0 |
| Sr | 3.3 |
| Ba | 43.9 |
| Al | 4.1 |
| P | 14.1 |
| F | 3.6 |
| O | 28.0, |

wherein the ratio of F to P amounts to 0.26 and the sum of the alkaline earth amounts to 50.2.

4. Method for the manufacture of an optical phosphate glass according to one of the preceding claims, characterised thereby, that it is molten from a batch which displays the following initial composition (in % by weight):

| | |
|-------------|-------------|
| $Mg(PO_3)_2$ | 12.3—19.3 |
| $Ba(PO_3)_2$ | 17.0—20.0 |
| $Al(PO_3)_3$ | 11.3—13.3 |

wherein the content of alkaline earth metaphosphates amounts to between 29.3 and 37.3 and the total content of all the metaphosphates used amounts to between 40.6 and 49.6,

| | |
|---------|----------|
| $MgF_2$ | 1.0 |
| $SrF_2$ | 2.5—3.6 |
| $BaF_2$ | 1.0 |
| $AlF_3$ | 2.5, |

wherein the content of alkaline earth fluorides amounts to between 4.5 and 5.6 and the total content of all the fluorides used amounts to between 7.0 and 8.1,

| | |
|-----------|-----------|
| SrO | 1.0 |
| BaO | 25.3—39.3 |
| $Al_2O_3$ | 2.0— 5.0 |
| $Y_2O_3$ | 8.0 |
| $Gd_2O_3$ | 14.0 |
| $B_2O_3$ | 1.1 |
| $ZrO_2$ | 3.3 |
| $Nb_2O_5$ | 6.0 |
| $Ta_2O_5$ | 6.0 |

wherein the content of alkaline earth oxides amounts to between 26.3 and 40.3, the content of oxides of the trivalent elements amounts to between 2.0 and 19.0, the content of oxides of the tetravalent or pentavalent elements (Zr or Ta and Nb) amounts up to 6.0 and the total content of all oxides used amounts to between 42.3 and 51.3.

5. Method according to claim 4, characterised thereby, that the batch displays the following initial composition (in % by weight):

| | |
|-------------|------|
| $Mg(PO_3)_2$ | 19.3 |
| $Ba(PO_3)_2$ | 17.0 |
| $Al(PO_3)_3$ | 11.3 |
| $MgF_2$ | 1.0 |
| $SrF_2$ | 3.6 |
| $BaF_2$ | 1.0 |
| $AlF_3$ | 2.5 |
| SrO | 1.0 |
| BaO | 39.3 |
| $Al_2O_3$ | 4.0. |

6. Method for the manufacture of a glass according to at least one of the claims 4 and 5, characterised thereby, that it takes place according to the following steps:

a) charging the initial batch into a platinum crucible heated to 1100 to 1150°C within 60 minutes,

b) increasing the melt temperature to 1230 to 1270°C with simultaneous stirring within a time of 15 minutes,

c) clarifying the melt at temperatures between 1130 to 1170°C within a time of up to 45 minutes with simultaneous stirring at reduced stirring speed,

d) reducing the temperature to a pouring temperature of 880 to 920°C,

e) pouring into steel moulds preheated to up to 550°C and

f) fine annealing in the furnace.